# EUROPEAN PATENT APPLICATION

(11) **EP 2 518 978 A2**
(43) Date of publication of application: **31.10.2012**
(21) Application number: 12165183.0
(22) Date of filing: 23.04.2012
(51) Int. Cl.: H04L 29/08, G06F 17/30

(54) **Context-Aware Mobile Search Based on User Activities**

(30) Priority: 25.04.2011 US 201113093355
(71) Applicant: Telefonaktiebolaget L M Ericsson AB (Publ), 164 83 Stockholm (SE)
(72) Inventor: Xing, Bo, Fremont, CA California 94555 (US); Svensson, Martin, SE 12629 Hägersten (SE)
(74) Representative: Rees, Simon John Lewis

(57) **Abstract**

Search processes are improved by modeling a mobile device user's context for a particular mobile search activity. Activity data characterizing usage of the mobile communications device is collected. This data may include the user's usage of the music and video player, including the types of media and specific titles, as well as activity data related to phone calls and other communications activities. The activity information is used by a predictive model to predict search parameters based on recent activity data. The predictive model can provide suggested search parameters, based on the user's recent activity as well as on search-specific user input. In some cases, the predictive model may be used to re-order the search results returned from a conventional search engine, based on the collected activity data.

## Description

### BACKGROUND

The present invention relates generally to data services in mobile communications networks and more particularly relates to techniques for improving keyword-based searching using mobile devices.

Use of the "Mobile Internet" is increasing rapidly and is expected to experience even faster growth in the coming years, with as many of forty percent of all mobile subscribers expected to be Mobile Internet users by 2013. With the Mobile Internet increasingly penetrating into people's daily lives, there has been a surge in users' demand for searching and retrieving content from mobile devices on the go. As used herein, "mobile search" thus refers to web search operations originating from mobile communication devices, such as mobile telephones, including smart phones, as well as wireless-enabled laptop computers, personal digital assistants, and the like, rather than from stationary computers.

Because of the small screens and keyboards associated with these mobile devices, it is much harder for users to express their information needs and to locate relevant search results on mobile devices. When web search approaches are applied to mobile platforms, usability and user experience become significant issues. This has been demonstrated in research studies, which show that many users had frustrating experiences with mobile search and are reluctant to search from their mobile devices thereafter. One such study, titled "Prospects of Mobile Search," was produced by the European Commission's Joint Research Center in 2010, and is available at http://ftp.jrc.es/EURdoc/JRC56100.pdf.

Because of these problems, it is clear that mobile searches should not be based on simple porting of conventional web search approaches to the mobile domain. Instead, improved techniques are needed.

### SUMMARY

Search processes and apparatus are modified to model a mobile device user's context for a particular mobile search activity. The user's activities before and after a search query is entered are tracked, and this information is used to create personalized search experiences. This "context-aware mobile search" approach allows a user to more easily enter search keywords and facilitates a more intelligent comprehension of the user's search needs, to yield the most relevant results.

In various embodiments of this approach, activity data characterizing the user's usage of each of several user features of the mobile communications device is collected. For instance, the user's usage of the music player, including the types of music and specific titles is monitored and tracked. Activity data related to phone calls and other communications activities can be collected as well. This activity information is fed into a predictive model that, for any given search, can predict search parameters based on recent activity data for a user at the time of the search. In various embodiments, this predictive model can provide suggested search parameters, based on the user's recent activity as well as on search-specific user input. These suggested search parameters may include completion suggestions for partially entered keyword or suggested corrections for partially or fully entered keywords. In some cases, the predictive model may also be used to re-order the search results returned from a conventional search engine, based on the collected activity data.

Thus, one example method for searching databases using a mobile communications device comprises collecting activity data characterizing the usage of each of a plurality of user features on the mobile communications device and detecting the initiation of a database search by the user of the device. In response to this event, one or more search parameters are predicted, based on recent activity data for user activities concurrent with or proximately preceding the detected search event. These predicted search parameters are then provided to the user of the mobile communications device. In response to user confirmation, a search query containing at least one of these predicted search parameters is submitted to a search engine remote from the mobile communications device.

In some embodiments, one or more sets of suggested search parameters are provided by the prediction process, based on the recent activity data, prior to receiving search-specific user input. In some of these and in other embodiments, predicting of one or more search parameters may include providing one or more suggested search parameters based on the recent activity data and based on search-specific user input. These suggested search parameters can include a suggested completion for a partially entered keyword or a suggested correction for an at least partially entered keyword.

In several embodiments, the predicting of one or more search parameters includes predicting a probable search activity based on the recent activity data and based on a predictive model generated from the collected activity data. The predictive model may comprise a variable-order Markov model, in some embodiments.

In some embodiments, the predictive engine is also used to improve the presentation of search results to the user of the mobile communication device. Thus, several embodiments of the methods summarized above further include receiving a plurality of ordered search results in response to the search query and re-ordering the plurality of search results using a predictive model generated from the collected activity data.

In some systems, the re-ranking and re-ordering process discussed above may be implemented independently of and/or separately from the prediction of search parameters. Accordingly, another example for searching databases using a mobile communications device begins with collecting activity data characterizing the usage of a plurality of user features on the mobile communications device and generating a search query, based on data input by a user of the mobile communications device. The search query, comprising one or more search parameters, is then submitted to a search engine remote from the mobile communications device. Several search results are received in response to the search query, and are ranked by relevance to the search parameters. These results are then re-ranked, based on collected activity data for user activities concurrent with or proximately preceding said re-ranking.

In addition to the methods summarized above, several variants are disclosed and described in further detail in the following detailed description. In addition, mobile communication devices and network-connected processing nodes configured to carry out one or more of these methods are also described. Thus, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Figure 1 illustrates an example communications network, providing context for the inventive techniques disclosed herein.

Figure 2 illustrates an example of the relationships between a mobile client and other functional aspects of the search technologies described herein.

Figure 3 is a process flow diagram illustrating an example method providing enhanced search services to users of mobile communication devices.

Figure 4 is a process flow diagram illustrating an example process for generating search hints or suggestions, or for re-ranking of search results.

Figure 5 is a process flow diagram illustrating an example method for searching a database using a mobile communications device.

Figure 6 is a process flow diagram illustrating an example method for re-ranking search results.

Figure 7 illustrates components of an example mobile communication device configured according to some embodiments of the present invention.

Figure 8 illustrates components of an example network node configured according to some embodiments of the present invention.

### DETAILED DESCRIPTION

It should be understood that the following description, while indicating several embodiments of the invention, is given by way of illustration only. Various changes and modifications within the scope of the invention as claimed will become apparent to those skilled in the art upon reading the following description and viewing the attached drawings.

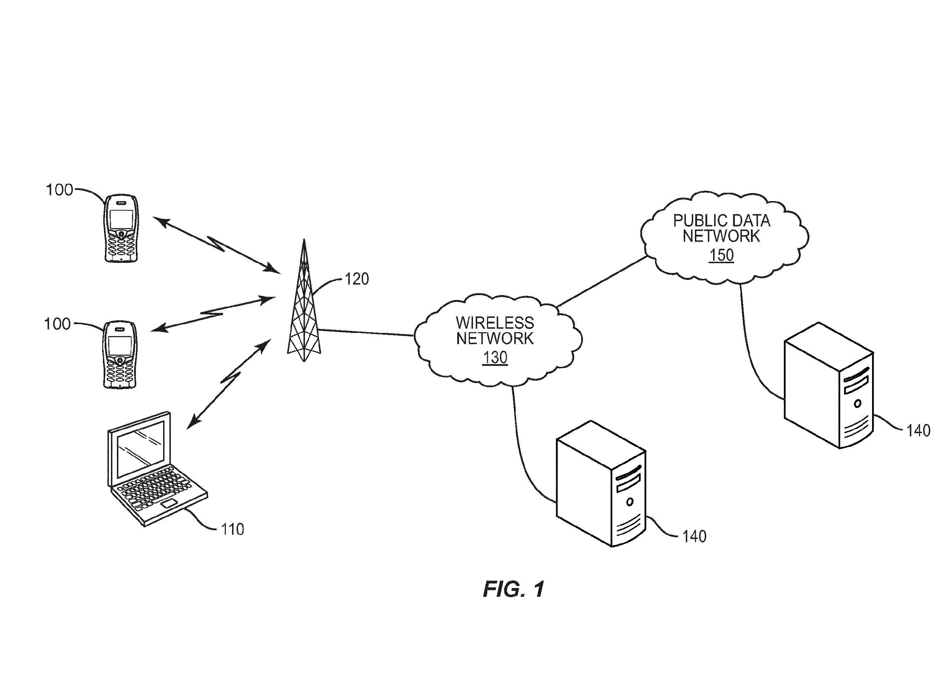

Figure 1 is a simplified system diagram illustrating components of a communications network in which the inventive search techniques described herein may be implemented. The communications network in Figure 1 includes a wireless network 130, accessible to mobile communication devices 100 and 110 via wireless base station 120. Wireless network 130 is connected to any number of servers 140, which may be used by the operator of wireless network 130 to provide various services to the users of mobile devices 100 and 110, including search services. Likewise, other service providers may provide services to mobile devices, including search services. These services may be provided through additional servers 140 connected to the wireless network 130 via a public data network 150, such as the Internet.

As noted above, performing searches on mobile devices presents problems arising from the small form factor and limited input/output capabilities typical of many mobile devices. Accordingly, improved search techniques are needed. The need for particularly crafted solutions to mobile search arises from the fact that searches from mobile devices are often more urgent than those initiated from conventional computers. Some of this may stem from the fact that the usability of mobile search today is unsatisfactory, leading users to limit their searches on mobile devices to those occasions when there is really a big need. However, it is also often true that the information sought through a mobile search is highly relevant to the current time and location, such so that the user cannot wait until he has access to a computer, or that the mobile search is closely related to other tasks the user is performing with the mobile device.

For example, consider a user that is listening to Mariah Carey's song "Hero" on her smart phone, while commuting to work on the subway. She might wish to find the lyrics of the song. However, if she searches for "hero", a large number of unrelated results will be displayed. For instance, links to web pages about the movie "Hero", the definition of the word "hero", the smart phone "Hero", the TV series "Heroes", several books titled "The Hero," and the like will be displayed. Results related to Mariah Carey's song "Hero" may be returned, along with links related to Enrique Iglesias' song "Hero."

If the user types in additional keywords, such as "hero mariah carey", she may find the results for the song's lyrics among the top of the results. However, if the user is a musician, she may be more interested in finding the chords of the song than its lyrics, in which case she will have to search for "hero mariah carey chords".

A search query could be more sophisticated if complex logic and/or long phrases are involved. In such scenarios, if the user's contextual information (e.g., the user is listening to Mariah Carey's "Hero", and she is a musician) are captured and taken into account in the search, refined and personalized search results can be delivered without the user having to enter all the keywords.

As already noted, there are at least two major problems with existing solutions to mobile search: low usability due to the inherent limitations of the mobile devices, and unsatisfactory user experience due to lack of personalization. When mobile devices are deemed simply as yet another interface for the same types of web search that are used on conventional computer platforms, many problems are created. First, typing on the small hard/soft keyboards on mobile devices is oftentimes cumbersome and errorprone. Mobile users would prefer to do minimal typing to retrieve the results they seek. Sometimes even more painful than typing on mobile devices is finding the specific information being sought from a large number of search results. Endless scrolling and clicking "next" on small screens can be very frustrating. In order to reduce the effort needed to find the right search result, a user might type in more keywords to narrow down the scope for searching. However, the typing issue then surfaces again.

A few measures have been taken to enhance the usability of mobile search. One notable effort is voice search, which eliminates the need for users to type by recognizing users speaking out the keywords. One drawback of voice search is that the accuracy of voice recognition is often low, especially given a large set of keywords and/or a noisy environment. The accuracy problem can be more acute for non-native speakers of the search language, who may have heavy accents. Voice-to-text accuracy can certainly be improved through pre-training of the voice recognition engines, but users are often reluctant to spend the time necessary to train a speaker-dependent voice recognition engine.

Although not specifically designed for mobile devices, technologies such as search hints (suggesting popular searches as a user types in keywords) and instant search (instantly returning results as a user types in keywords) are helpful on mobile devices, as they can reduce the amount of typing needed when users are entering popular keywords. Unfortunately, these technologies do not provide personalization. That is, every user receives the same search hints and the same list of results for the same keywords. Each user's typical search behaviors and personal needs at the time of searching are simply not taken into account.

Another approach known as local search looks for relevant information near a user's location. This approach considers, at least to some extent, the users' needs at the time of searching. However, the search results will be identical for two people at the same location querying the same keywords. Value would be added if search results were to be further personalized.

Accordingly, search processes and apparatus can be modified to model the user's context of mobile search. These techniques track the user's activities before and after a search query is entered, and use this information to create personalized search experiences for them. With such "context-aware mobile search", a user does not need to enter a large number of query keywords, and yet her search needs are intelligently comprehended to yield the most relevant results. The search results are then presented to the user in a mobile-friendly and user-personalized way, so that minimal efforts are needed to locate the right results.

In various embodiments of this approach, activity data characterizing the user's usage of each of several user features of the mobile communications device is collected. For instance, the user's usage of the music player, including the types of music and specific titles is monitored and tracked. Activity data related to phone calls and other communications activities can be collected as well. This activity information is fed into a predictive model that, for any given search, can predict search parameters based on recent activity data for a user at the time of the search. In various embodiments, this predictive model can provide suggested search parameters, based on the user's recent activity as well as on search-specific user input. These suggested search parameters may include completion suggestions for partially entered keyword or suggested corrections for partially or fully entered keywords. In some cases, the predictive model may also be used to re-order the search results returned from a conventional search engine, based on the collected activity data.

In some embodiments of this approach, the predictive model is a variable-order Markov model that is created and maintained for each user. Throughout this disclosure, the term "model" is not used in its abstract sense, but is instead used to refer to a particular instantiation of a predictive modeling algorithm on a computer processor or processors, coupled to user-specific activity data stored in computer memory. This processor-based model tracks the user's search behaviors before, during, and after search activities. The predictive model notes, for instance, which the user's typical activities immediately before making a search are relevant to the search. Further, the predictive model notes the results the user chooses to browse after making the search. Based on what it has learned over the course of previous searches, when a user initiates a search the model predicts the user's search intentions using her relevant activities as the input. Search hints and suggestions are created based on the predictions and are presented to the user. The query that the user actually submits then triggers a prediction of what results she likely will click, again based on the user's recent activities. Based on this prediction, the search results are re-ranked. During the process, the user's choices of suggested queries to submit and the search results to browse further improve the Markov model.

In a similar manner, Markov models may be built for particular groups of users and are used as additional support for predicting. In this manner, the activities and search selections of similar users may be used to further improve predictions for any particular individual. This approach makes the mobile search experience more social.

By adopting the techniques described herein, mobile operators can place themselves in a premium position to provide context-aware mobile search service to users. The mobile operators already possess large amounts of data about their subscribers, including subscriber profiles, locations, traffic patterns, and spending capabilities. With users' permissions, operators can harness these great assets to offer personalized mobile search experiences. In addition, operators can position themselves to offer paid context-aware advertisements embedded into search results. This can become a new source of revenue for them.

In terms of system architecture, the search techniques described herein can be implemented using a "Learning and Predicting Engine," instantiated somewhere in the Internet "cloud." This Learning and Predicting Engine is coupled to mobile clients on devices. Placing the bulk of the computing activities related to the learning and prediction algorithms in the cloud allows a single platform to support multiple mobile users simultaneously. Of course, with the growing computing power available on the mobile devices, some of the modeling and predicting activities can be pushed to the mobile device, which may enhance the speed and responsiveness of the search suggestions or the results re-ranking. These tradeoffs are well known to those skilled in mobile applications development.

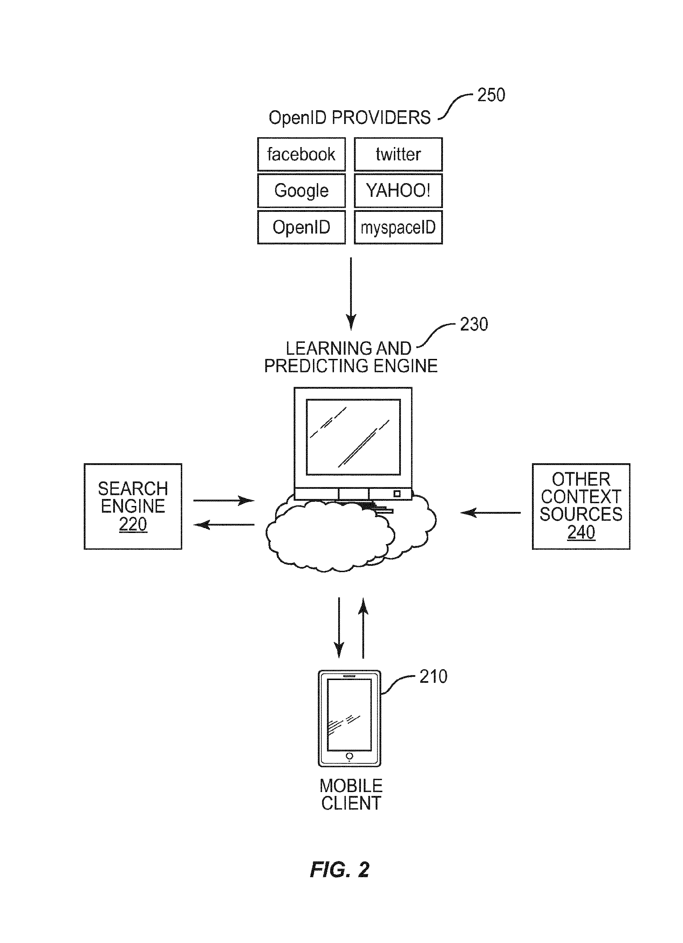

Figure 2 thus illustrates the primary building blocks of one implementation of a context-aware search system according to the techniques described herein. At the center is the Learning and Predicting Engine (LPE) 230, which is a critical functional component in the system that brings context-awareness to mobile search. In some embodiments, it is hosted by a service provider that has interest in offering enhanced search experiences to its users. The LPE's job is to maintain the Markov models for users, and to learn users' search behaviors and predict their search intentions using the models. In learning users' search behaviors, the LPE takes inputs from the mobile search client on users' devices, as well as other sources that capture parts of users' context. When a user launches a query from the search client on her mobile device, the mobile client communicates it to the LPE 230. The LPE 230 generates search hints and suggestions according to the user's current activities, and pushes them to the user.

Another component of the context-aware search system is the backend search engine 220. The backend search engine 220 can be a conventional search engine, such as any of the popular search engines that provide API accesses to their search technologies and allow developers to build customized search services (e.g., Google, Yahoo, Bing, etc.). Once the search is finalized and submitted by the user, the LPE 230 forwards the query to the backend search engine 220. When results come back from the backend search engine 220, the LPE re-sorts the results before pushing them to the user for presentation.

Obviously, the mobile client 210 on users' devices is another important component of the context-aware search system, as it serves as the interaction point where search suggestions, hints, and re-ranked results are presented. When a user launches the client 210 (indicating the user's intent to search), the client 210 shows a simple user interface, e.g., containing a search bar as well as a list of search suggestions personalized for the user based on her context. If the user chooses to enter keywords in the search bar, corresponding search hints might appear in a pulldown menu. When the user submits a search (by either clicking a suggested search or pressing the search button next to the search bar), the search is forwarded to the LPE 230. When results come back from the LPE 230, the client 210 simply presents the results.

In addition to the user interface, the mobile client 210 runs a daemon that continuously captures users' activities on mobile devices. It maintains the representation of the recent activities that are within a session's time window. At the time of searches, it reports the activities to the LPE 230 as needed. These activities are then used by the LPE 230 as input for learning the user's search behaviors and predicting her search intentions.

Apart from the contextual information collected from users' mobile devices (e.g., a user was using a particular app, a user was listening to a particular song), information from other sources, if available, could be helpful in more accurately predicting users' search intentions. For example, mobile operators can be the source of users' web access activities (e.g., a user was browsing a particular web page). Other sources, including social web communities, such as Facebook and Twitter, can be the source of users' social web activities (e.g., a user was writing a particular status update). Retrieval of users' information from these context sources of course requires users' authorization in advance. Thus, in addition to the other system components discussed above, OpenlD providers 250 (such as Google, Facebook, Twitter, Yahoo, and additionally mobile operators' Generic Bootstrapping Architecture) can play a role in providing flexible authentication and identification of users.

Whether or not all or just a part of the Learning and Predicting Engine is implemented in the cloud, the Learning and Predicting Engine takes as its input activity data characterizing a user's activities on a mobile device and around the web. In some embodiments, a daemon application is installed on the mobile device to capture activity data for the user, including such data as which applications the user is using, which songs the user is listening to, etc., both before and after searches are performed. This daemon can run constantly, in the background so that it is generally unobserved by the user. A mobile application, which may appear to the user as a conventional search application or search interface, serves as the front end and user interface for the service.

The modeling techniques employed in various embodiments of the present invention are centered about the idea that users typically conduct mobile searches in a context. This context can be described for a given search by a user's activities before the search (e.g., using an app, listening to a song) as well as after the search (e.g., viewing a particular web page). By learning the typical context in which a given user or group of users make searches, the user's most probable search/browsing intentions are predicted. Based on the predictions, personalized search experiences are delivered, through mechanisms that include search suggestions (providing sample searches for users to click before users type), search hints (hinting/auto-completing keywords as users type), and result re-ranking (presenting the search results in such an order that the ones users likely will click appear early).

As stated earlier, a user's search intentions are predicted using the user's activities before the search, based on her typical activities before and after searches. This brings up several questions to be answered: What types of activities are used to capture a user's context? How many and which activities are used? How are they used to learn and predict the user's search activities?

In some embodiments, the following device/network-related activities are used to model context: using an app, listening to a song, watching a video, taking a picture/video, viewing a calendar event, making a phone call, text messaging/chatting, browsing a webpage, configuring a phone setting, writing a status update. Also, making a search itself is an activity. Of course, this is not an exclusive list of the activities that can be tracked for modeling purposes; other activities may be tracked in some embodiments.

In addition to this list of mobile user activities, there are other aspects of users' context that are not conventionally viewed as activities but that can be tracked in much the same way and incorporated into the predictive model. For instance, certain user activities may be inferred from such data as the users' location, the current time, or a combination of such contextual information. Activities such as checking into a place, attending an event, being concerned with a well-known public event, and the like might be inferred from the mobile device's physical and temporal context, even in the absence of specific user input. Sources from which user activities may be collected include not only the user's mobile device, but also from the user's mobile operator, the user's social web communities, etc.

Collecting user activity data generally involves collecting metadata that describes the activities in detail. For instance, this metadata might include the name and/or type of an application, the name and/or genre of a song, picture, or video, the name of a person, the keywords of a search, the title of a webpage, the name of a place, etc. Such metadata may already be known to the mobile device via its attachment to a data file or executable file, but may additionally be obtained from external sources, such as from an online application "store" (for metadata about apps), from music/movie repositories (for metadata about media), or from event websites (for metadata about public events).

The number of activities to be used to predict a user's search intention at a given time is bounded by a cut-off time. That is, those pre-search activities that are regarded as indicators of the user's search intentions are determined by the time at which the activities took place. For example, all user activities that happened within ten minutes before a search may be viewed as a session of activities that are likely relevant to the search. The activities that happened before this cut-off time probabilistically have a low impact on the search, and hence are ignored. Of course, this cut-off time may vary from one implementation to another. Indeed, some implementations may adapt the cut-off time as the predictive model gains more information about the user's actual interactions with the search process. Thus, if the model for a given user demonstrates that activities close to the cut-off time are consistently of very low relevance to the actual search results selected by the user, the cut-off time may be reduced so that only more recent activities are incorporated into subsequent predictions. The converse is also true - if activities close to the cut-off time are consistently of high relevance, the window may be expanded to include slightly older activities as well.

Although all the pre-search activities might have impact on the search, their potential impacts will vary. The potential impact of a particular pre-search activity on a search may be measured by how recent it is, as well as by its relevance to other pre-search activities. In general, the more recent the activity is, the higher impact it potentially has on the search. Likewise, when there is relevance between multiple pre-search activities, a higher potential impact of these activities on the search is implied. Hence, relevant activities are grouped together- the more activities in a group, the higher the potential impact.

The relevance between pre-search activities is detected by comparing their metadata. Extending the example presented earlier, consider a scenario where the musician discussed above plays the "Angry Birds" application while listening to the song "Hero." These two activities would likely be regarded by the predictive model as having no commonality and hence would be assigned equal potential impact on the search. In contrast, consider that the user additionally browses a web page that contains the lyrics of the song "Hero." In this case, the activities "listening to a song" and "browsing a web page with song information" are grouped together, implying a higher probability that the user will search something related to "Hero".

Learning users' search behaviors and predicting their search intentions may be achieved through the use of Variable-Order Markov (VOM) models. A Markov model models a user's activities as a set of states. The causal relationships between the activities are viewed as transitions between the states. Hence, the probable search intentions following a sequence of relevant activities are represented by the probability distribution of the transitions from a sequence of states. The Markov model has a variable order because the number of activities in a group is not fixed.

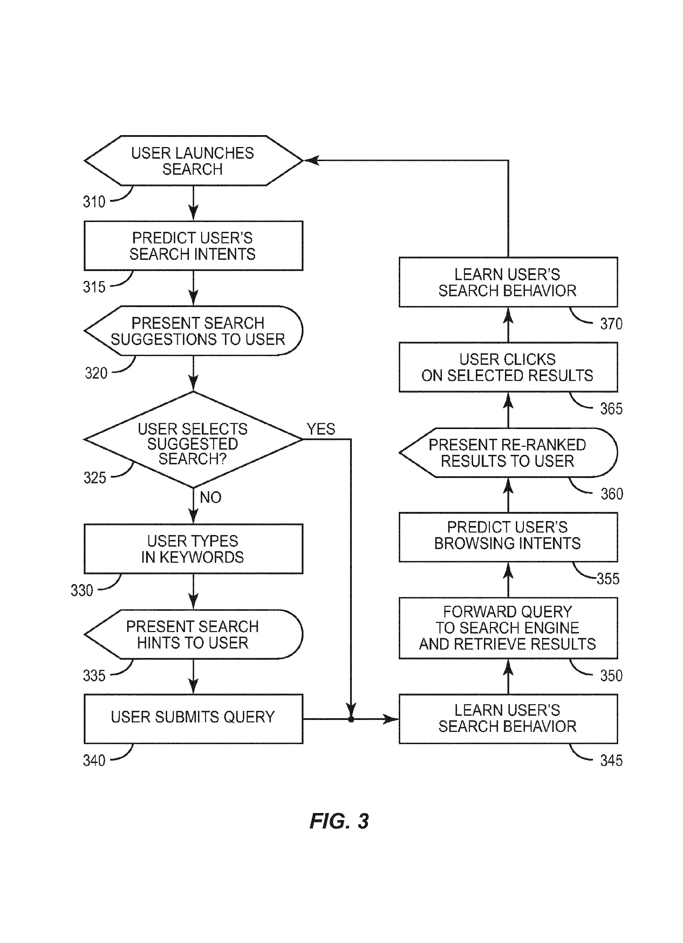

The overall flow of the technique is illustrated in Figure 3. During each search, learning the user's behavior and predicting her intentions go hand in hand. In the following discussion, the simple example scenario presented earlier is used again to illustrate the process.

One aspect of the techniques is the formatting and collection of user activity data characterizing the user's usage of mobile device features, communication services, web services, and the like. This data is collected on an ongoing basis, so that recent activity data is always available for making predictions relative to a given search. Thus, while activity data is constantly collected, the process can be viewed as "beginning" when the mobile device or network-based application detects that a user is about to start a mobile search. This detecting of the launch of a search is illustrated generally at block 310 of Figure 3. More specifically, the initiation of a search may be detected by the user's launching of a mobile search client application on the device, or by accessing a mobile search web portal, or by clicking into a search window on a web page, etc.

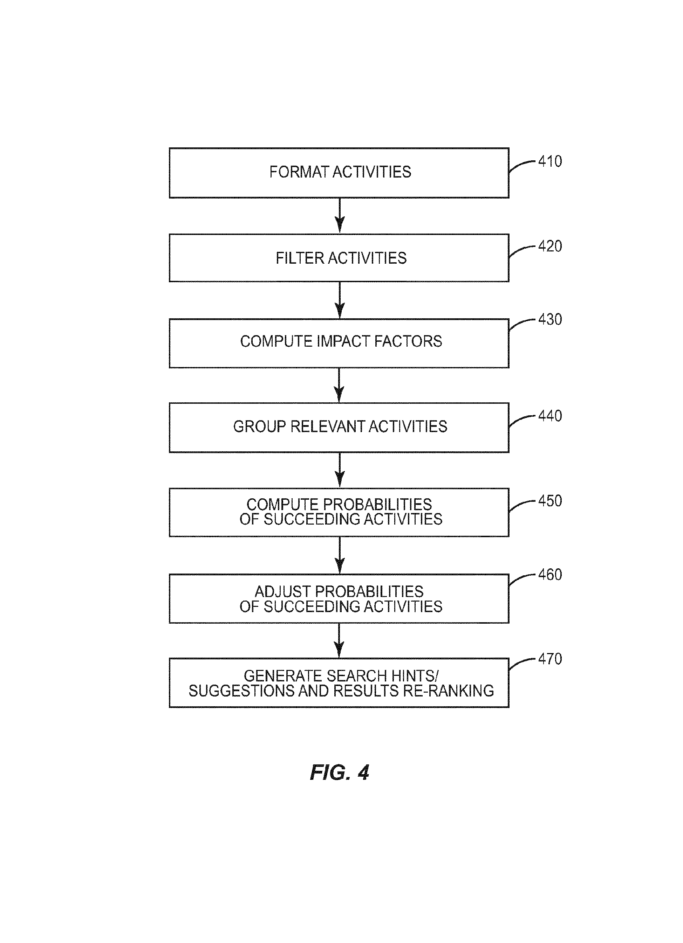

When the initiation of a search is detected, the user's search intentions are predicted and search suggestions are presented to the user. These steps, illustrated at blocks 315 and 320 of Figure 3, are among the most complicated aspects of the technique. Thus, a detailed process flow for an example implementation of these steps is presented in Figure 4. It should be noted that all of the operations in the process pictured in Figure 4 may be performed at a network-based computer processing platform (i.e., "in the cloud") in some embodiments. In other embodiments, all or some of the operations may be performed at the mobile client. In implementations where the operations are split between the mobile device and the cloud, the output from one of the operations shown in the figure may be transmitted from one platform to the other. Thus, for example, the formatting and filtering of activities, as shown at blocks 410 and 420 of Figure 4 might be performed at the mobile device, with the filtered data then fed to the network-based platform for the subsequent operations.

In either case, as illustrated at block 410, activity data for the user's recent activities are gathered, along with the corresponding metadata and represented in a uniform format. Each activity is tagged with a timestamp that indicates at what time the activity took place. In one example, this data could indicate the following set of time-stamped activities
- 2010-12-02T9:59:OOZ: making a phone call (metadata: Alice)
- 2010-12-02T10:02:OOZ: browsing a web page (metadata: Angry Birds walkthrough)
- 2010-12-02T10:03:OOZ: using an app (metadata: Angry Birds)
- 2010-12-02T10:09:OOZ: listening to a song (metadata: Mariah Carey, Hero)

The collected activity data is then filtered, as shown at block 420, to rule out obsolete activities that likely have low impact on the search. As noted above, this may be done based on the notion of an activity "session" that is bounded by a cut-off time. In the present example, assume that the current time is 2010-12-02T10:14:OOZ, and that the cut-off time is fourteen minutes. In this case, the first activity "making a phone call" is removed, because it occurs fifteen minutes before the search is initiated and thus falls outside of the fourteen-minute session window.

For each of the activities within the session, an impact factor is calculated, capturing the potential impact of the activity on the search. This is shown at block 430 of Figure 4. The impact factor of a single activity is a probability value that is proportional to the recency of the activity. The recency of a pre-search activity may be measured by the elapsed time since the start of the session window - the closer the activity is to the beginning of that window, then the less its recency. In our example, "browsing a web page" is 2 minutes after the beginning of the fourteen-minute session window; "using an app" is 3 minutes later; "listening to a song" is 9 minutes away. Thus, "listening to a song" is significantly more recent than the other activities. This is reflected in the calculation of impact factors; an example of which is shown as follows:
- browsing a web page (metadata: Angry Birds walkthrough): 2/14 = 0.143
- using an app (metadata: Angry Birds): 3/14 = 0.214
- listening to a song (metadata: Mariah Carey, Hero): 9/14 = 0.643

As shown at block 440, the activities may also be grouped, based on their relevance to one another. The relevance may be detected, for example, by comparing metadata. Each activity group contains a sequence of relevant activities, with their common metadata. Then, the impact factor of each of the activity groups is calculated. The impact factor of an activity group is the sum of the impact factors of the activities in the group. In the present example, this may result in the following:
- Activity Group 1: (common metadata: Mariah Carey, Hero) listening to a song: 0.643
- Activity Group 2: (common metadata: Angry Birds) browsing a web page on "walkthrough", using an app: 0.143 + 0.214 = 0.357

Each of the activity groups is then fed to the user's Markov model, to compute the probability distribution of succeeding activities. This is shown at block 450. In the present example, predicted probabilities for search activities that follow the activity groups could look like this:
- Activity Group 1:
   a. Making a relevant search on "lyrics": 0.60
   b. Making a relevant search on "album": 0.20
   c. Using an app: 0.20
- Activity Group 2:
   a. Making a relevant search on "cheats": 0.80
   b. Making an irrelevant search: 0.20

For the purpose of predicting search intentions, the probable succeeding activities that are irrelevant (e.g., non-search related activities, searching for things irrelevant to preceding activities) are eliminated. In effect, the probability distributions for succeeding activities are adjusted, as shown at block 460, to account for the fact that it is not possible to generate relevant hints for searches that are completely unrelated to the search context. This leads to the following probability distribution in our example:
- Activity Group 1:
   a. Making a relevant search on "lyrics": 0.75
   b. Making a relevant search on "album": 0.25
- Activity Group 2:
   a. Making a relevant search on "cheats": 1.00

To obtain the final probability distribution of succeeding activities, the probability of each succeeding activity is multiplied, i.e., weighted, by the impact factor of the activity group it succeeds. In our example, this yields the following:
- Activity Group 1:
   a. Making a relevant search on "lyrics": 0.75 * 0.643 =0.482
   b. Making a relevant search on "album": 0.25 * 0.643 =0.161
- Activity Group 2:
   a. Making a relevant search on "cheats": 1.00 * 0.357 =0.357

Based on this final probability distribution, a search hint/suggestion is created, as shown at block 470, by combining a probable succeeding search activity and the common metadata of the activity group it results from. These personalized, context-aware search hints/suggestions are presented to the user in descending order of probability, followed by other regular hints/suggestions (e.g., generated by a search engine). The personalized search hints/suggestions might look like this, in the present example:
- Mariah Carey Hero Lyrics
- Angry Birds Cheats
- Mariah Carey Hero Album

In the case of search hints, irrelevant hints may be removed at each user keystroke, based on what the user has typed in, while the order of the keywords in the other hints are adjusted. In the present example, if the user now types in "hero", the following might remain as search hints:
- Hero Mariah Carey Lyrics
- Hero Mariah Carey Album
   However, if the user instead types in "lyrics", only the following might remain as a search hint:
- Lyrics Mariah Carey Hero

The same probability data may be used after the search is performed, to re-rank the results, as will be discussed in more detail below.

Referring back to Figure 3, block 320 illustrates the presentation of search suggestions to the user, based on the predictions generated by the Learning and Prediction Engine. Next, the user submits her search, either following a suggestion/hint or at her own choice. While the query is being forwarded to a search engine, the user's current search behavior is learned to improve the Markov model.

In the present example, assume that the user chooses to query "Mariah Carey Hero Lyrics" as suggested. In the process flow illustrated in Figure 3, then, the decision box illustrated at block 325 will yield a "YES," indicating that the user has selected a suggested search. Accordingly, the process branches to block 345, which illustrates the updating (learning) of the predictive model to account for the user's search behavior. In this particular case, the user's Markov model is updated to reflect this successful prediction. One possible result is that the probability distribution with respect to Activity Group 1 will now look like this:
- Activity Group 1:
   a. Making a relevant search on "lyrics": 0.64
   b. Making a relevant search on "album": 0.18
   c. Using an app: 0.18
In this case, the probability distributions for Activity Group 2 remain the same because that transition did not take place.

On the other hand, if the user does not select a suggested search, the process flow of Figure 3 continues as shown at block 330, with the user entering in additional keywords and, in some cases, being presented with additional hints as shown at block 335. Assume for the sake of example that the user submits a query, as shown at block 340, which is completely different than the previously presented suggestions. In this case, the learning of the user's search behavior, as shown at block 345, will involve the incorporation of this new data into the prediction model. For instance, if the user chooses to query "hero HTC phone," which does not involve any of the presented hints or suggested, then her Markov model might be updated to the following, with respect to Activity Group 1:
- Activity Group 1:
   a. Making a relevant search on "lyrics": 0.55
   b. Making a relevant search on "album": 0.18
   c. Making an irrelevant search: 0.09
   d. Using an app: 0.18
In this case, the probability distribution for Activity Group 2 will be updated in a similar manner, since the actual search activity, "making an irrelevant search," appears in both groups.
With this updating behavior, whether or not the user selects a suggested search, the Markov model gains a better understanding of the user's search habits. As a result, the predictive engine will likely provide more accurate predictions in the future.

The right-hand side of the process flow of Figure 3 illustrates the post-search aspects of the modeling and prediction techniques. As discussed above, the model learns from the user's search selections, and updates the probabilities associated with certain activities and activity groups. This is shown at 345. At the same time, the actual search is carried out, as indicated at block 350.

While the results are being gathered, the predictive model can also predict the user's browsing intentions, using the same activity data and other contextual information that was used to predict the user's search intentions. This is shown at block 355. The predicted browsing intentions can be used to re-rank and re-order the search results returned from the search engine. Thus, once the search results come back from the search engine, the user's Markov model is consulted to re-weight and possibly re-rank the results. The re-ranked results are then presented to the user, as shown at block 360.

The intention is to have the results that the user is most likely to click appear early. This procedure of predicting user's browsing intentions is similar to that of predicting user's search intentions. The difference is that, here, only the activity path that the user has taken is the input to the Markov model. In our example, the activity sequence is as follows:
- (Common metadata: Mariah Carey, Hero) - listening to a song, making a relevant search on "lyrics"
The probability distribution of succeeding activities that the Markov model outputs could be like this:
- Browsing a web page on http://www.lyrics007.com: 0.66
- Browsing a web page on http://www.elyrics.net: 0.33
In this case, results from the above two web sites will be re-ranked to appear on the top of the results, if they are not already in that position.

Based on which results the user visits, after the search results are presented, the user's Markov model is updated accordingly. This is shown at block 365, which illustrates the user selection of one of the presented results, and block 370, which illustrates the learning of the predictive model from the search-related browsing selection. In the example at hand, if the user visits a result at http://www.lyrics007.com, the probability distribution regarding the above activity sequence might be updated to the following:
- Browsing a web page on http://www.lyrics007.com: 0.75
- Browsing a web page on http://www.elyrics.net: 0.25
This completes the mobile search process, leaving the predictive model better situated for the user to start another search.

The techniques described above can be modified to include a "social flavor" in mobile search. In addition to learning individual users' search behaviors based on their mobile-based activities, the predictive model can be adapted to learn from the search behaviors of groups of users, which provide additional input for making search hints/suggestions. Groups can be built from a user's contacts in a social web community (e.g., Facebook), users of similar demographic characteristics (e.g., males aged between 30 and 35), and of course, all users of the mobile search service. This social feature is especially helpful when a new user jumpstarts and nothing about her is known. It also brings a new type of search experience, driven in part by the searches that social contacts make in similar circumstances.

For each of those groups, a Markov model may be built in the same way as for individual users. Activities of all users in a group are taken as the input for the Markov model's learning. When a user searches, multiple relevant Markov models are consulted for predicting the user's search intentions, each given a weight indicating how preferable the model is. When being presented to the user, the predictions made by the models are combined on basis of the weights.

In the previous example, the user's Markov model yielded the following probability distribution:
- Making a relevant search on "lyrics": 0.75
- Making a relevant search on "album": 0.25
Now assume that, with the same input, the Markov model of the user's Facebook friends yields the following probability distribution:
- Making a relevant search on "lyrics": 0.80
- Making a relevant search on "composer": 0.20
Further assume that both models are given a 0.5 weight. Then, the combined probability distribution will be:
- Making a relevant search on "lyrics": 0.775
- Making a relevant search on "album": 0.125
- Making a relevant search on "composer": 0.10

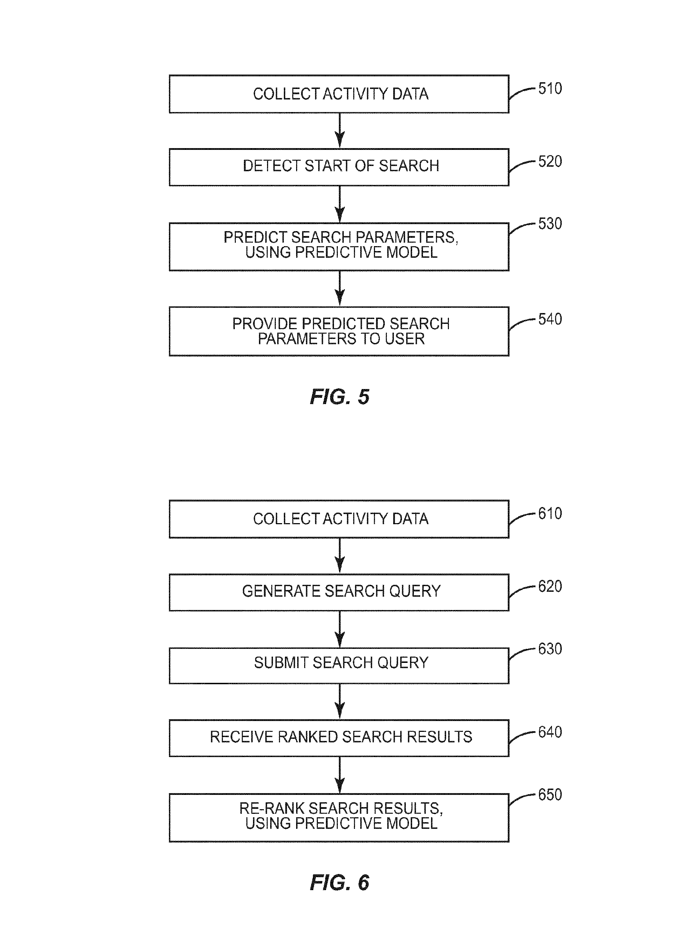

The discussion above provided detailed examples of how a predictive modeling engine, a mobile client, and a backend search engine may be modified and used to provide an enhanced search experience to users of mobile communication devices. Figure 5 illustrates a process flow diagram that illustrates more generally how these techniques may be implemented, according to some embodiments of the invention. This process flow begins, as shown at block 510, with the collecting of activity data for the user. As noted earlier, this activity data characterizes the user's usage of each of several user features on the mobile communications device, such as communications activities (phone, messaging, e-mail), browsing activities, music playing or video viewing activities, and the like. In several embodiments, this activity data is time-stamped, so that it can later be filtered for relevance to a particular search event. In systems where the learning and prediction engine is located in the "cloud," rather than at the user's mobile device, the activity data is forwarded to that engine, either as it is collected or in connection with a particular search event.

As indicated at block 520, the process continues with the detecting of the start of a database search by a user of the device. This may be simply determining that a search application has been activated, or that the user has browsed to an Internet-based search page or selected a search window on a displayed page. In various embodiments, this detection step may take place at the mobile client, or at a network-based platform based on data sent by the mobile client, or both.

As indicated at block 530, this detecting of a database search triggers the prediction of search parameters, using a predictive model. At block 540, the predicted search parameters are provided to the user. As noted above, these predicted search parameters may comprise suggested search parameters, such as suggested keywords. They may also include suggested completions for partially entered keywords, or suggested corrections for an at least partially entered keyword.

In any case, the prediction is based at least on recent activity data for user activities concurrent with or proximately preceding the detection of the search event. As discussed above, the prediction may also be based on activity data for a group to which the user belongs, such as a social network for the device user. In several embodiments, the prediction includes predicting a probable search activity based on the recent activity data and based on a predictive model generated from the collected activity data. More particularly, the predictive may be based on a variable-order Markov model.

Figure 6 is a process flow diagram illustrating how the predictive model can be used to re-rank and re-order the search results. The process begins, as shown at block 610, with the collecting of activity data. This is the same sort of activity data discussed above for Figure 5, and can be the same collection. As shown at block 620, a user generates a search query, with or without the aid of a suggested search parameters provided by the method illustrated in Figure 5. The search query is then submitted to a search engine, as shown at block 630; as shown at block 640, the results are subsequently received from the search engine.

The results received from the search engine are typically ranked by relevance to the submitted search parameters. In some cases, this may be explicit, with a numerical rank or weight attached to each result. In other cases, the ranking may be implicit in the ordering of the results as provided by the search engine. In either case, the search results can be re-ranked, as discussed earlier, to account for the user-specific context of the search itself. Thus, as indicated at block 650, the collected activity data for user activities concurrent with or proximately preceding the search and/or re-ranking is used to predict the user's likely selection from among the results, with the more probable choices placed at a higher rank, so that they will be presented more prominently to the user.

Nowadays, instead of focusing entirely on geographic coverage and/or price, mobile subscribers give more weight to apps and services when choosing their operators. In order to stand out in the ever escalating competition, a mobile operator needs to offer new value-added services to its subscribers (one of such attempts having been launching app stores of their own). A context-aware mobile search service could potentially be a differentiating service that an operator can provide to subscribers. The service can either come with the phones that are sold by the operator, or be put in its app store for subscribers to subscribe to. Taking advantage of the search services described above, targeted advertising can be embedded into the search results, creating additional value for both operators and their subscribers.

Not surprisingly, mobile operators possess huge amount of data about their subscribers - they know who the subscribers are, where they are and have been, what web sites and apps they are and have been accessing, etc. However, they have been struggling with understanding how to make the best use of the data and how to make value out of it. A context-aware mobile search service is a perfect place where operators can apply their heavy knowledge of users' context, of course with users' permissions, and get values in return.

Furthermore, mobile operators own abundant resources to operate such a service as context-aware mobile search. Some of them have their own cloud, making hosting and managing the service even easier for them. The techniques described herein, especially if provided by a mobile operator, may provide any or all of several advantages. First, these techniques provide users with personalized mobile search experiences that are tailored to their information needs, without the users having to explicitly express the needs. The techniques involve the modeling of users' context as activities, which are then used to understand users' search needs. The modeling is easily extensible as new aspects of users' context become available.

Because these techniques are independent from the basic search technology, these techniques can leverage to the maximum extent what available search engines offer, without the need to re-engineer a new search engine. Further, these techniques can be adapted to incorporate the social aspects of mobile search, bringing a new type of mobile search experience to users. These techniques can place a mobile operator at an ideal position to host context-aware mobile search services, and thus differentiate itself from others service providers. This can provide direct revenues to mobile operators if they opt to integrate paid advertisement into the context-aware mobile search service.

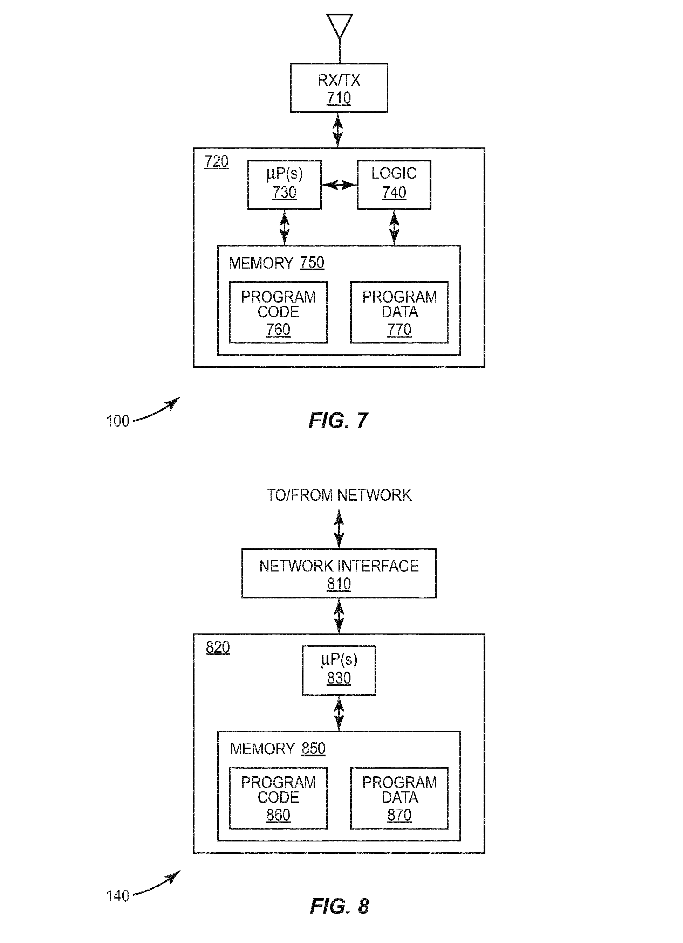

These techniques can be readily adapted to existing physical platforms. An example mobile communication device 100 according to some embodiments of the present invention is shown in Figure 7, while a corresponding network-connected processing node 140 is illustrated in Figure 8.

Mobile communication device 100 includes a communications transceiver 710, which provides connectivity to the mobile communications network. The radio transceiver may be adapted for operation in one or several standards-based mobile networks, such as in the Wideband-CDMA, GSM/EDGE, and LTE mobile networks specified by the 3^{rd}-Generation Partnership Project (3GPP). Mobile communication device 100 further comprises a processing circuit 720, which includes one or more microprocessors 740 and memory 750, which in turn includes program code 760 and program data 770. In several embodiments, program code 760 includes program instructions for carrying out one or several of the techniques described above for searching databases using a mobile communication device. More generally speaking, these computer program instructions may be provided to a processor of a general purpose computer, a special purpose computer, or other programmable data processing apparatus to produce a machine, such that the instructions, which execute via the processor of the computer or other programmable data processing apparatus, create means for implementing the functions described herein and illustrated in the accompanying block diagrams and flow diagrams. These computer program instructions may also be stored in a computer usable or computer-readable memory that may direct a computer or other programmable data processing apparatus to function in a particular manner, such that the instructions stored in the computer usable or computer-readable memory produce an article of manufacture including instructions that implement the functions described herein. Several of the functional entities described herein may be implemented together on a single processor or computer, or each may be implemented on separate processors or computers. Those skilled in the art will recognize the advantages and disadvantages of grouping or distributing the functions described herein.

Network-connected processing node 140, which may be implemented on a conventional server platform, includes a network interface 810 - this interface unit comprises the connection point to and from the client in mobile communication device 100 and to any other functional components of the context-aware search system of the present invention that reside in separate physical units, such as the backend search engine and/or one or more social network data sources. Network interface 810 in particular may comprise conventional interface hardware adapted for connection to an Ethernet network and/or to an IP-based network.

Network node 140 further comprises a processing circuit 820, which includes one or more microprocessors 830 and memory 850, which in turn includes program code 860 and program data 870. In several embodiments, program code 860 includes program instructions for carrying out one or several of the techniques described above for searching databases using a mobile communication device. As was the case with the computer program instructions for mobile communication device 100, these computer program instructions may be provided to a processor of a general purpose computer, a special purpose computer, or other programmable data processing apparatus to produce a machine, such that the instructions, which execute via the processor of the computer or other programmable data processing apparatus, create means for implementing the functions described herein and illustrated in the accompanying block diagrams and flow diagrams. These computer program instructions may also be stored in a computer usable or computer-readable memory that may direct a computer or other programmable data processing apparatus to function in a particular manner, such that the instructions stored in the computer usable or computer-readable memory produce an article of manufacture including instructions that implement the functions described herein. Several of the functional entities described herein may be implemented together on a single processor or computer, or each may be implemented on separate processors or computers. Again, those skilled in the art will recognize the advantages and disadvantages of grouping or distributing the functions described herein.

Of course, those skilled in the art will appreciate that the system diagrams, apparatus block diagrams, and search-related techniques described above are merely exemplary, and that various modifications and extensions of these procedures are possible. In particular, those skilled in the art will recognize that the functional aspects of the network node 140 described herein may be deployed in a number of different configurations, depending on the network structures, operator business models, and other factors.

With these and other variations and extensions in mind, those skilled in the art will appreciate that the foregoing description and the accompanying drawings represent non-limiting examples of the systems and apparatus taught herein for facilitating load balancing in a data packet network. As such, the present invention is not limited by the foregoing description and accompanying drawings. Instead, the present invention is limited only by the following claims and their legal equivalents.

## Claims

1. A method for searching databases using a mobile communications device, the method comprising:
collecting activity data characterizing the usage of each of a plurality of user features on the mobile communications device;
detecting the initiation of a database search by a user of the mobile communications device;
responsive to said detecting, predicting one or more search parameters, based on recent activity data for user activities concurrent with or proximately preceding said detecting;
presenting at least one of the one or more search parameters to the user of the mobile communications device; and
responsive to user confirmation, submitting a search query to a search engine remote from the mobile communications device, wherein said search query comprises at least one of the one or more search parameters.

2. The method of claim 1, wherein said predicting of one or more search parameters comprises providing one or more sets of suggested search parameters, based on the recent activity data, prior to receiving search-specific user input.

3. The method of claim 1, wherein said predicting of one or more search parameters comprises providing one or more suggested search parameters based on the recent activity data and based on search-specific user input.

4. The method of claim 3, wherein at least one of the suggested search parameters is a suggested completion for a partially entered keyword or a suggested correction for an at least partially entered keyword.

5. The method of claim 1, wherein predicting one or more search parameters comprises predicting a probable search activity based on the recent activity data and based on a predictive model generated from the collected activity data.

6. The method of claim 5, wherein the predictive model comprises a variable-order Markov model.

7. The method of claim 1, further comprising:
receiving a plurality of ordered search results in response to the search query; and
re-ordering the plurality of search results using a predictive model generated from the collected activity data.

8. The method of claim 1, performed by the mobile communications device and further comprising forwarding the collected activity data to a remote node for generation of a predictive model.

9. The method of claim 1, further comprising:
determining a group of users that includes the user of the mobile communication device; and
collecting additional activity data characterizing activities of the group of users;
wherein said predicting one or more search parameters is based further on the additional activity data.

10. The method of claim 9, wherein the group of users is determined from an Internet-based social network for the user of the mobile communication device.

11. A method for searching databases using a mobile communications device, the method comprising:
collecting activity data characterizing the usage of a plurality of user features on the mobile communications device;
generating a search query, based on data input by a user of the mobile communications device;
submitting a search query to a search engine remote from the mobile communications device, said search query comprising one or more search parameters;
receiving a plurality of search results in response to the search query, wherein the search results are ranked by relevance to the search parameters; and
re-ranking the search results, based on collected activity data for user activities concurrent with or proximately preceding said re-ranking.

12. A mobile communication device, comprising:
a communications transceiver;
a user interface; and
a processing circuit operatively coupled to the user interface and the communications transceiver and configured to:
collect activity data characterizing the usage of each of a plurality of user features on the mobile communications device;
detect the initiation of a database search by a user of the mobile communications device, via the user interface;
responsive to said detection, predict one or more search parameters, based on recent activity data for user activities concurrent with or proximately preceding said detection;
present at least one of the one or more search parameters to the user of the mobile communications device; and
responsive to user confirmation, submit a search query to a search engine remote from the mobile communications device, via the communications transceiver, wherein said search query comprises at least one of the one or more search parameters.

13. The mobile communication device of claim 12, wherein the processing circuit is configured to predict the one or more search parameters by providing one or more sets of suggested search parameters, based on the recent activity data, prior to receiving search-specific user input via the user interface.

14. The mobile communication device of claim 12, wherein the processing circuit is configured to predict the one or more search parameters by providing one or more suggested search parameters based on the recent activity data and based on search-specific user input.

15. The mobile communication device of claim 14, wherein at least one of the suggested search parameters is a suggested completion for a partially entered keyword or a suggested correction for an at least partially entered keyword.

16. The mobile communication device of claim 12, wherein the processing circuit is configured to predict the one or more search parameters by predicting a probable search activity based on the recent activity data and based on a variable-order Markov model generated from the collected activity data.

17. The mobile communication device of claim 12, wherein the processing circuit is further configured to:
receive a plurality of ordered search results in response to the search query; and
re-order the plurality of search results using a predictive model generated from the collected activity data.

18. A mobile communication device, comprising:
a communications transceiver;
a user interface; and
a processing circuit operatively coupled to the user interface and the communications transceiver and configured to:
collect activity data characterizing the usage of each of a plurality of user features on the mobile communications device;
forward the collected activity data to a remote node, via the communications transceiver, for generation of a predictive model;
collect partial search data from a user of the mobile communications device, via the user interface;
forward the partial search data to the remote node, via the communications transceiver;
receive one or more suggested search parameters from the remote node, via the communications transceiver, in response to the partial search data; and
responsive to user selection, submit a search query to a search engine remote from the mobile communications device, via the communications transceiver, wherein said search query comprises at least one of the one or more search parameters.

19. A network-connected processing node, comprising:
a network communications interface circuit; and
a processing circuit operatively coupled to the network communications interface circuit and configured to:
receive activity data characterizing the usage of each of a plurality of user features on a mobile communications device;
detect the initiation of a database search by a user of the mobile communications device;
responsive to said detecting, predict one or more search parameters, based on recent activity data for user activities concurrent with or proximately preceding said detection; and
send the one or more search parameters to mobile communications device.

20. The network-connected processing node of claim 19, wherein the processing circuit is configured to predict the one or more search parameters by providing one or more sets of suggested search parameters, based on the recent activity data, prior to receiving search-specific user input.

21. The network-connected processing node of claim 19, wherein the processing circuit is configured to predict the one or more search parameters by providing providing one or more suggested search parameters based on the recent activity data and based on search-specific user input.

22. The network-connected processing node of claim 21, wherein at least one of the suggested search parameters is a suggested completion for a partially entered keyword or a suggested correction for an at least partially entered keyword.

23. The network-connected processing node of claim 19, wherein the processing circuit is configured to predict the one or more search parameters by predicting a probable search activity based on the recent activity data and based on a variable-order Markov model generated from the collected activity data.

24. The network-connected processing node of claim 19, wherein the processing circuit is further configured to:
receive a plurality of ordered search results in response to a search query submitted by or for the mobile communications device; and
re-order the plurality of search results using a predictive model generated from the collected activity data.

25. The network-connected processing node of claim 19, wherein the processing circuit is further configured to:
determine a group of users that includes the user of the mobile communication device;
collect additional activity data characterizing activities of the group of users; and
predict said one or more search parameters based further on the additional activity data.

26. The network-connected processing node of claim 19, wherein the processing circuit is further configured to determine the group of users from an Internet-based social network for the user of the mobile communication device.
